# EUROPÄISCHE PATENTANMELDUNG

(11) **EP 4 571 248 A1**
(43) Veröffentlichungstag der Anmeldung: **18.06.2025**
(21) Anmeldenummer: 23215863.4
(22) Anmeldetag: 12.12.2023
(51) Int. Cl.: G01C 15/06, G01B 11/26

(54) **VORRICHTUNGEN UND VERFAHREN ZUR WINKELMESSUNG**

(71) Anmelder: Hilti Aktiengesellschaft, 9494 Schaan (LI)
(72) Erfinder: Kumar, Nitish, 9470 Buchs (CH)
(74) Vertreter: Hilti Aktiengesellschaft Corporate Intellectual Property

(57) **Zusammenfassung**

Die Erfindung betrifft ein eine **Positionsmarkierung (100)** für ein Winkelmessgerät, beispielsweise eine Totalstation (126), einen Bauroboter (10), einen Peilstab (120), ein Verfahren (1000) sowie ein Winkelmessgerät. Die Positionsmarkierung (100) weist ein richtungsabhängiges Muster (102) aufweist und / oder erzeugt ein solches. Die Erfindung ermöglicht eine kostengünstige und driftarme Messung von Winkeln

## Beschreibung

Die Erfindung betrifft Vorrichtungen und Verfahren zur Winkelmessung. Derartige Vorrichtungen werden beispielsweise bei Vermessungsarbeiten auf Hochbau-Baustellen oder Tiefbau-Baustellen verwendet.

Aus der US 2021/0270640 A1 sind ein Winkelerkennungssystem und eine Winkelerkennungsmethode beschrieben, die ein zweifarbiges Bitmuster verwenden, um damit einen Rollwinkel eines senkrecht ausgerichteten Peilstabs zu bestimmen.

Vermessungsarbeiten auf Baustellen, beispielsweise Hochbau-Baustellen oder Tiefbau-Baustellen, erfordern häufig Winkelmessungen mit hoher Genauigkeit. Teilweise können auch Längenmessungen durch Winkelmessungen, beispielsweise im Rahmen von Peilungen, ersetzt werden. Positionen können dann schneller bestimmt werden, wenn die Winkelmessungen mit einer höheren Geschwindigkeit erfolgen können als Längenmessungen. Wünschenswert wäre es, wenn mehrere Winkelmessungen zeitgleich durchgeführt werden könnten. Hierdurch könnte sich die Geschwindigkeit der Messungen weiter steigern lassen.

Mit Hilfe von Winkelmessgeräten werden Positionsmarkierungen angepeilt und ein Sichtwinkel bestimmt. Aus mehreren Sichtwinkeln, gegebenenfalls in Verbindung mit einer oder mehreren Distanzmessungen, können beispielsweise Totalstationen ein Koordinatensystem einmessen oder eine Position auf einer Baustelle relativ zu einem eingemessenen Koordinatensystem bestimmen. Dazu weisen die Totalstationen in der Regel mehrere derartiger Winkelmessgeräte auf. Die Winkelmessgeräte benötigen eine aufwändige Sensorik, um hohe Winkelauflösungen zu erzielen. Totalstationen weisen daher häufig sehr hohe Herstellungskosten auf.

Um Positionen beispielsweise auf einem Boden einer Baustelle zu bestimmen, werden Peilstäbe von den Totalstationen angepeilt. Zur exakten Bestimmung der Position müssen die Peilstäbe bislang exakt vertikal ausgerichtet sein, da ansonsten durch einen von der Senkrechten unterschiedlichen, unbekannten Neigungswinkel und / oder unbekannten Gierwinkel Messfehler resultieren würden.

Aufgabe der vorliegenden Erfindung ist es daher, Vorrichtungen und Verfahren anzubieten, um kostengünstig Winkel, insbesondere Neigungswinkel oder Gierwinkel, auf Baustellen messen zu können. Idealerweise sollten die Messungen driftarm oder sogar driftfrei möglich sein.

Gelöst wird die Aufgabe durch eine **Positionsmarkierung** für einen Winkelmessgerät, wobei die Positionsmarkierung ein richtungsabhängiges Muster aufweist und / oder erzeugt. Das richtungsabhängige Muster kann beispielsweise ein mehrfarbiges Bild, ein Schatten oder ein durch die Positionsmarkierung erzeugtes Signal sein. Das richtungsabhängige Signal kann beispielsweise ein optisches, insbesondere ein visuelles, infrarotes und / oder ultraviolettes Signal sein. Denkbar ist auch, dass das Signal ein elektromagnetisches Signal einer niedrigeren Frequenz, beispielsweise im Bereich von 1 MHz bis 100 GHz, ist. Durch die Richtungsabhängigkeit des Musters kann im Muster selbst bereits ein Sichtwinkel kodiert sein.

Damit kann der Sichtwinkel gemessen werden, in dem das Muster selbst ausgewertet wird. Eine Richtungsmessung im eigentlichen Sinne, das heißt eine direkte Messung der Richtung, in der sich die Positionsmarkierung oder das Muster befindet, kann sich erübrigen. Da keine iterative Summierung zur Bestimmung des Sichtwinkels notwendig ist, können sich Fehler nicht kumulieren. Messungen können driftfrei erfolgen.

Das Muster kann beispielsweise einen Farbverlauf umfassen. Der Farbverlauf kann durch subtraktive und / oder durch additive Farbmischung erzeugt sein und / oder erzeugt werden. Allgemein kann im Spektrum, das vom Muster abgestrahlt oder reflektiert wird, die Richtung kodiert sein. Das richtungsabhängige Muster kann auch unterschiedliche Polarisationen, beispielsweise einen Verlauf der Polarisationsrichtung einer linearen Polarisierung, umfassen.

Die Positionsmarkierung kann wenigstens eine Wölbung aufweisen. Sie kann beispielsweise eine Röhrenform, eine Stangenform, eine Teilkugelform und / oder eine ellipsoide Form aufweisen. Die Wölbung kann bewirken, dass je nach Sichtwinkel unter dem die Positionsmarkierung betrachtet wird oder unter dem ein Bild der Positionsmarkierung aufgenommen wird, ein anderer Bereich der Positionsmarkierung sichtbar oder aufnehmbar ist.

Die Positionsmarkierung kann ein in zwei verschiedenen, insbesondere zueinander orthogonalen, Richtungen variierendes Muster aufweisen. Dadurch können Winkel in wenigstens zwei Dimensionen bestimmbar sein. Alternativ oder ergänzend kann die Winkelauflösung von Messungen gesteigert werden, beispielsweise nach Art eines Nonius.

Die Positionsmarkierung kann ein Muster mit mehr als zwei verschiedenen Ausprägungen, insbesondere einen Verlauf, aufweisen, sodass eine Vielzahl von verschiedenen Winkeln messbar ist. Bei einem Verlauf kann eine analoge Winkelmessung möglich sein. Die Positionsmarkierung kann beispielsweise ein drei- oder mehrfarbiges Farbmuster, einen Farbverlauf und / oder einen Polarisationsrichtungsverlauf aufweisen.

Die Positionsmarkierung kann ein optisch anisotropes Material und / oder ein optisch dichroitisches Material aufweisen, womit ein richtungsabhängiges Muster erzeugt werden kann.

Sie kann flach gebaut sein und benötigt insbesondere keine Wölbung.

Bei einer Klasse von Positionsmarkierung können diese ein Mehrfachbild, insbesondere ein Lentikularbild, ein Parallaxenbarrieren-Bild und / oder ein Hologramm aufweisen. Auch solche Positionsmarkierungen können flach ausgebildet sein. In ein Hologramm kann beispielsweise ein dreidimensionales Bild eines richtungsabhängig gestalteten Zylinders eingeprägt sein. In Lentikularbildern können auch direkt Bilder der Winkelmaße, also in Form von Zahlenwerten, QR-Codes oder dergleichen, eingeprägt sein, sodass ein Winkel oder ein Winkelbereich direkt in Form des Zahlenwertes in der Kameraaufnahme lesbar ist. Dies ist auch mit einem Hologramm realisierbar. Es empfehlen sich für hohe Winkelauflösungen besonders Mehrfachbilder mit einer hohen Anzahl, beispielsweise wenigstens 90, von winkelabhängigen Bildern.

In den Rahmen der Erfindung fällt des Weiteren ein **Bauroboter** zur Ausführung einer Bauarbeit auf einer Baustelle, umfassend eine mobile Plattform, einen Roboterarm mit einem Endeffektor sowie einer Positionsmarkierung nach der hier beschriebenen Art. Die Positionsmarkierung kann beispielsweise am Endeffektor angeordnet sein. Dann lässt sich nahezu instantan ein Sichtwinkel, unter dem der Endeffektor erscheint, bestimmt werden. Es müssen lediglich geringe Anforderungen an Hardware und Software, insbesondere an die zur Auswertung benötigte Rechenleistung, gestellt werden. Durch Messen mehrerer der Sichtwinkel, insbesondere von mehreren Positionsmarkierungen und gegebenenfalls von einer oder mehreren Distanzen, kann der Endeffektor wenigstens zweidimensional, insbesondere wenigstens dreidimensional, lokalisiert werden.

In den Rahmen der Erfindung fällt auch ein **Peilstab** zur Vermessung eines Messpunktes, wobei der Peilstab wenigstens eine Positionsmarkierung der hier beschriebenen Art aufweist. Ein langgehegter Wunsch, der durch einen solchen Peilstab umgesetzt sein kann, ist, bei Peilstäben driftfrei Neigungswinkel bestimmen zu können, um so Positionen beispielsweise auf dem Boden einer Baustelle auch mit einem nicht exakt vertikal ausgerichteten Peilstab bestimmen zu können. Durch Ablesen des Neigungswinkels können bei nicht vertikaler Ausrichtung des Peilstabes Korrekturen einfach eingerechnet werden.

Weist der Peilstab eine Längenskala auf, beispielsweise auf einem Längenausdehnungsreduzierten Material wie einem üblicherweise als INVAR bezeichneten Stahl, so kann es genügen, mit Hilfe der Positionsmarkierung lediglich höchstens drei, insbesondere zwei, Winkelbereiche zu unterscheiden. Die Längenskala und die Positionsmarkierung können benachbart angeordnet sein. Die Positionsmarkierung kann auch Teil der Längenskala sein. Beispielsweise kann es genügen, dass die Längenskala als Lentikularbild mit wenigstens zwei verschiedenen Bildern ausgebildet ist, um einen Neigungswinkel und / oder einen Gierwinkel des Peilstabes präzise bestimmen zu können.

Weiter betrifft die Erfindung ein **Verfahren zur Messung eines Nickwinkels und** / **oder eines Gierwinkels** eines Körpers, wobei der Körper wenigstens eine Positionsmarkierung der hier beschriebenen Art aufweist, wobei wenigstens ein Bild des richtungsabhängigen Musters aufgenommen wird, wobei der Winkel als Funktion des aufgenommenen Bildes ermittelt wird. Somit wird es möglich, driftfrei auch Neigungswinkel und / oder Gierwinkel, also nicht nur Rollwinkel, zu bestimmen. Der Neigungswinkel und / oder der Gierwinkel können dabei als Sichtwinkel, unter dem der Peilstab von einem Winkelmessgerät aus betrachtet erscheint, bestimmt werden.

Auch ein **Winkelmessgerät** kann die Aufgabe lösen. Dazu kann sie wenigstens eine Kamera umfassen, wobei das Winkelmessgerät eingerichtet sein kann, eine Positionsmarkierung, insbesondere ein Bild der Positionsmarkierung, auszuwerten, um einen Sichtwinkel zur Positionsmarkierung zu ermitteln. Die Messung kann somit durch Auswerten des Bildes erfolgen. Die Auswertung kann auf einem funktionalen Zusammenhang zwischen dem Bild und dem zu bestimmenden Sichtwinkel basieren. Die Ermittlung kann damit insbesondere driftfrei erfolgen.

Weist das Winkelmessgerät wenigstens zwei zueinander versetzte Kameras auf, so können die unterschiedlichen Kameras die Positionsmarkierung aus unterschiedlichen Richtungen anvisieren. Eine Distanzmessung zur Positionsmarkierung kann dann erfolgen, ohne dass die von den Kameras aufgenommenen Bilder zueinander in Bezug gesetzt werden bräuchten, da sich die jeweiligen Sichtwinkel direkt aus den aufgenommenen Bildern ergeben. Die Distanz lässt sich dann unter Berücksichtigung des relativen Abstandes zwischen den Kameras ermitteln.

Denkbar ist alternativ oder ergänzend, dass das Winkelmessgerät wenigstens einen Distanzmesser, beispielsweise ein LI DAR und / oder eine Laufzeit-basierte Kamera (engl. Timeof-flight camera) aufweist, um zusätzlich zu Sichtwinkeln auch zugehörige Distanzen zu beispielsweise den Positionsmarkierungen direkt messen zu können.

Um die Positionsmarkierungen auch aus größerer Entfernung, wie sie auf Baustellen häufig vorkommen, ablesen zu können, sollte wenigstens eine der Kameras in horizontaler Richtung eine hohe Auflösung aufweisen. Die Auflösung kann insbesondere abhängig von einem maximal zulässigen Abstand des Geräts von der Positionsmarkierung abhängen. Die Kamera kann unterschiedliche Pixelzahlen in der Vertikalen und in der Horizontalen aufweisen.

Unter "horizontal" und "vertikal" können dabei eine Horizontale bzw. eine Vertikale in Bezug auf die Schwerkraftrichtung verstanden werden, wenn das Winkelmessgerät und damit die Kamera ordnungsgemäß aufgebaut ist.

Alternativ oder ergänzend kann auch das aufzunehmende Bild der Positionsmarkierung optisch vergrößert werden. Dazu kann wenigstens eine der Kameras ein einstellbares, insbesondere ein selbsttätig scharf stellendes, Objektiv aufweisen. Das Objektiv kann ein Teleobjektiv, insbesondere ein Autofokus-Teleobjektiv, aufweisen.

Denkbar ist auch, dass das Winkelmessgerät wenigstens einen Linienlaser aufweist.

Der Linienlaser kann parallel zu einer Sichtrichtung wenigstens einer der Kameras ausgerichtet sein. Dann kann der Linienlaser einen der Kamera zugewandten Punkt auf dem Muster der Positionsmarkierung markieren, um den Sichtwinkel noch präziser ermitteln zu können.

Der Linienlaser kann beispielsweise ein Horizontallaser sein. Der Horizontallaser kann beispielsweise eine Höhenlage auf der Linearskala des Peilstabes markieren. Aus der Höhenlage kann auch ein Neigungswinkel und / oder Gierwinkel, zumindest bis auf eine Symmetrieachse eindeutig, bestimmbar sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Patentansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: einen Bauroboter,
- Fig. 2 bis Fig. 9: verschiedene Ausführungsformen von Positionsmarkierungen,
- Fig. 10: ein Winkelmessgerät mit einem Peilstab und
- Fig. 11: ein Ablaufdiagramm eines Verfahrens.

In der nachfolgenden Beschreibung der Figuren werden zur Erleichterung des Verständnisses der Erfindung für gleiche oder sich funktional entsprechende Elemente jeweils die gleichen Bezugszeichen verwendet.

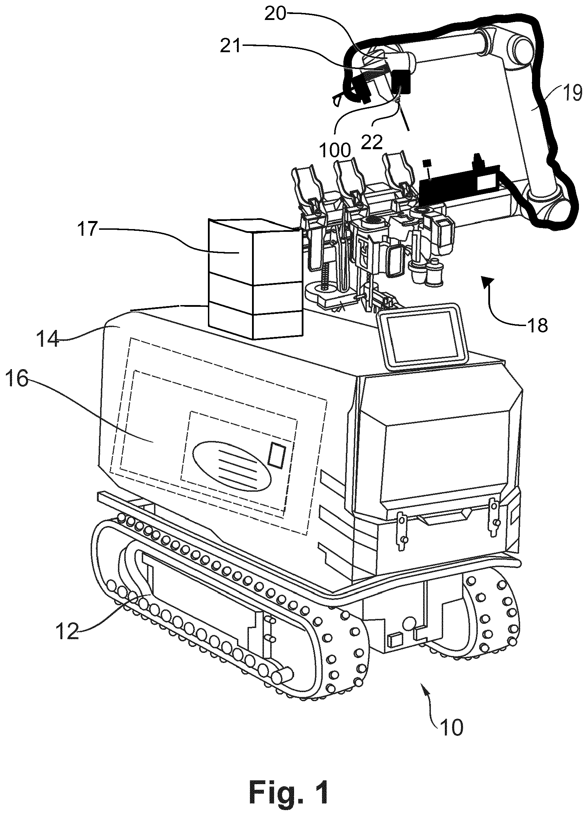

**Fig. 1** zeigt eine mobile Werkzeugmaschine in Form eines Bauroboters **10.** Der Bauroboter 10 umfasst eine als Kettenfahrwerk ausgebildete Fahrplattform **12,** einen in einem Gehäuse **14** ausgebildeten Steuerraum **16** und einen oberseitig des Gehäuses 14 angeordneten Roboterarm **18.** Der Roboterarm 18 umfasst eine Hubvorrichtung **17** zur vertikalen Verlagerung und einen multiaxial steuerbaren Arm **19.** Insgesamt kann der Roboterarm 18 auf eine maximale Reichweite von mindestens 4 m ausgefahren werden, sodass unter Berücksichtigung der Maße der Fahrplattform 12 sowie des Gehäuses 14 Bauarbeiten in Höhen von bis zu wenigstens 4,5 m ausgeführt werden können.

Am freien Ende des Arms 19 befindet sich ein Endeffektor **20** mit einer Wechselschnittstelle **21.**

An der Wechselschnittstelle 21 ist eine Werkzeugmaschine **22** angeordnet. Die Werkzeugmaschine 22 ist in diesem Ausführungsbeispiel eine Gesteinsbohrmaschine.

Der Bauroboter 10 ist zur Ausführung von verschiedenen Bauarbeiten in Decken, Wänden oder Böden auf einer Baustelle, insbesondere auf einer Hochbau-Baustelle oder einer Tiefbau-Baustelle, ausgebildet.

Der Bauroboter 10, insbesondere der Roboterarm 18, kann noch weitere Vorrichtungen, beispielsweise eine Steuerung, ein Prisma, ein Farbsprühgerät, einen Distanzmesser, eine Positions- und / oder Lage-Bestimmungslogik, weitere Kameras und / oder dergleichen aufweisen, auch wenn diese aus Vereinfachungsgründen in Fig. 1 nicht dargestellt sind.

An der Werkzeugmaschine 22 ist eine Positionsmarkierung **100** für ein Winkelmessgerät angebracht.

Ausführungsbeispiele einer solchen Positionsmarkierung 100 werden im Folgenden näher erläutert.

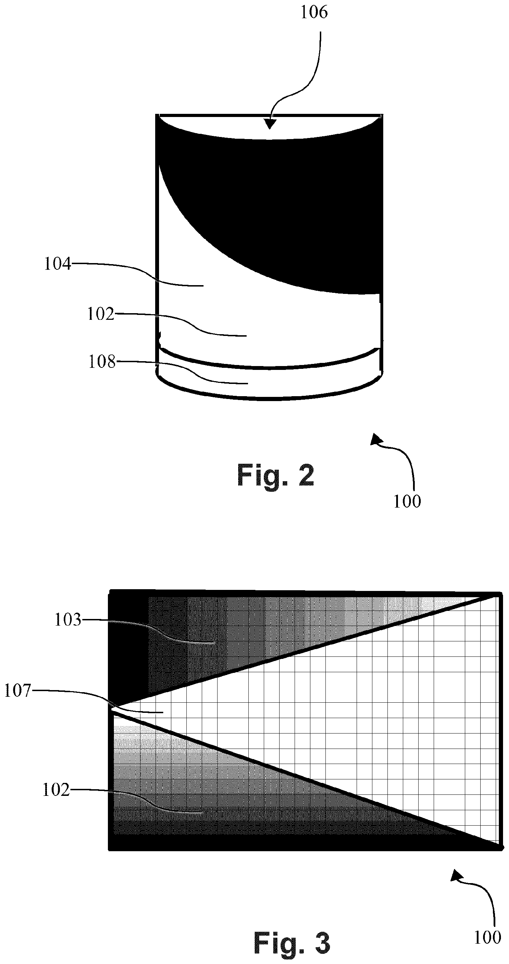

**Fig. 2** zeigt eine Positionsmarkierung 100. Es weist ein richtungsabhängiges Muster **102** auf. Die Positionsmarkierung 100 weist eine teilzylindrische, insbesondere halbzylindrische, Form auf. An ihrer Rückseite kann sie beispielsweise an einer Wand einer Baustelle befestigt werden. Ihre Vorderseite **104** weist eine Wölbung **106** auf.

Das richtungsabhängige Muster 102 ist dadurch ebenfalls gewölbt. Es weist einen Schwarzweißkontrast auf.

Je nach Sichtwinkel, unter dem das richtungsabhängige Muster 102 betrachtet wird, ergibt sich ein unterschiedliches Verhältnis zwischen Weiß und Schwarz. Somit lässt sich der Sichtwinkel als Funktion dieses Verhältnisses zwischen Weiß und Schwarz ermitteln.

Das richtungsabhängige Muster 102 kann einen aus allen Sichtwinkeln konstanten Bereich **108** aufweisen. Beispielsweise kann der konstante Bereich 108 eintönig weiß sein. Der konstante Bereich 108 kann zur Kalibrierung verwendet werden. Er kann zur zuverlässigen Unterscheidung des Schwarz vom Weiß des richtungsabhängigen Musters 102 verwendet werden.

**Fig. 3** zeigt eine Positionsmarkierung 100 mit einem Lentikularbild **107.** Das Lentikularbild 107 ist, wie mit einer Kreuzschraffur in Fig. 3 angedeutet, in einer Vertikalen mit einem richtungsabhängigen Muster 102 und in einer Horizontalen mit einem richtungsabhängigen Muster **103** versehen. Das richtungsabhängige Muster 103 im oberen Bereich der Positionsmarkierung 100 weist ein Graustufenverlauf auf, der bei unterschiedlichen horizontalen Sichtwinkeln unterschiedliche Grautöne liefert. Das richtungsabhängige Muster 102 im unteren Bereich der Positionsmarkierung 100 weist einen Graustufenverlauf auf, der bei unterschiedlichen vertikalen Sichtwinkeln unterschiedliche Grautöne liefert. Dieser zweifache Lentikulareffekt der Positionsmarkierung 100 ist dabei schematisch in Form von Graustufenverläufen in Fig. 3 repräsentiert.

Die Positionsmarkierung 100 gemäß Fig. 3 ist flach. Sie kann beispielsweise ebenfalls an einer Wand, eine Decke und / oder einen Boden einer Baustelle angebracht, insbesondere aufgeklebt werden. Da bei dieser Positionsmarkierung 100 das richtungsabhängige Muster 102 und das richtungsabhängige Muster 103 sich durch den Lentikulareffekt ergeben, ist es vorteilhaft, wenn die Positionsmarkierung 100 gegen Verbiegen geschützt ist. Beispielsweise kann ihre Rückseite mit einer zusätzlichen Schutzplatte verstärkt sein.

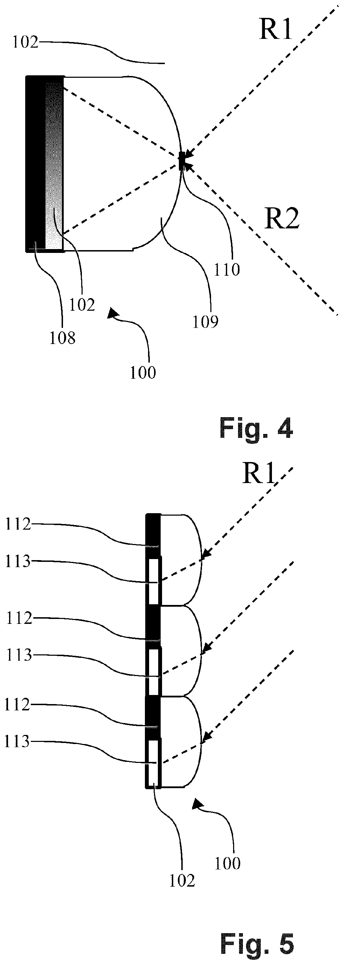

Eine weitere Ausführungsform einer Positionsmarkierung 100 ist in **Fig. 4** dargestellt.

Die Positionsmarkierung 100 weist eine Sammellinse **109** auf. Ein Fokuspunkt **110** ist auf der Sammellinse 109 markiert. Bei Sicht auf den Fokuspunkt 110 ergibt sich je nach Sichtrichtung **R1** oder **R2** ein anderes scheinbares Bild und damit ein richtungsabhängiges Muster 102. Dazu weist die Sammellinse 109 an ihrem Hintergrund ein mehrfarbiges Muster, beispielsweise einen Farbverlauf, insbesondere einen Graustufenverlauf, auf. Am Hintergrund kann ebenfalls ein konstanter Bereich 108 vorgesehen sein. Aus Darstellungsgründen ist in Fig. 4 der konstante Bereich 108 neben dem richtungsabhängigen Muster 102 abgebildet. Er kann jedoch auch in einem Bereich anderen angeordnet sein, solange dieser bei Blick auf den Fokuspunkt 110 im sich ergebenden scheinbaren Bild erkennbar ist.

Bei einer alternativen Ausführungsformen der Positionsmarkierung 100 kann die Sammellinse 109 durch ein dichroitisches, durchsichtiges Material ersetzt sein. Die Rückseite der Sammellinse 109 kann reflektierend ausgebildet sein. Wird dann auf den Fokuspunkt 110 mit einem beispielsweise polarisierten Licht gestrahlt, so weist das an der Rückseite reflektierte Licht je nach Sichtrichtung R1 beziehungsweise R2 unterschiedliche Polarisierungen auf, anhand derer wiederum der Sichtwinkel bestimmbar ist. Je nach Material und eingestrahltes Licht kann das reflektierte Licht auch eine andere Farbe aufweisen.

Zur leichteren Detektion, insbesondere um einen Störabstand zu Hintergrundlicht zu verbessern, kann das eingestrahlte Licht codiert, beispielsweise frequenzkodiert, sein.

**Fig. 5** zeigt stark vergrößert eine Positionsmarkierung 100 in Form eines Lentikularbildes als richtungsabhängiges Muster 102 mit lediglich zwei verschiedenen Einzelbildern **112** und **113.**

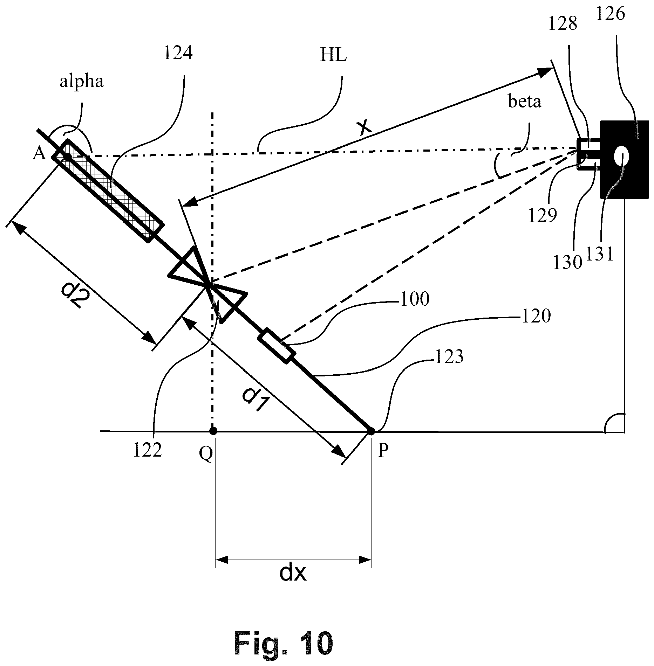

In Fig. 5 ist vereinfachend lediglich eine Lentikularzeile abgebildet. Denkbar ist, mehrere solcher Lentikularzeilen nebeneinander anzuordnen, um eine größere betrachtbaren Fläche zu erhalten. Eine solche Positionsmarkierung 100 kann beispielsweise verwendet werden, um Sichtwinkel in Bezug auf zwei gegensätzliche Halbräume zu unterscheiden. Ein Anwendungsbeispiel für eine solche Positionsmarkierung 100 ist nachfolgend im Zusammenhang mit Fig. 10 beschrieben.

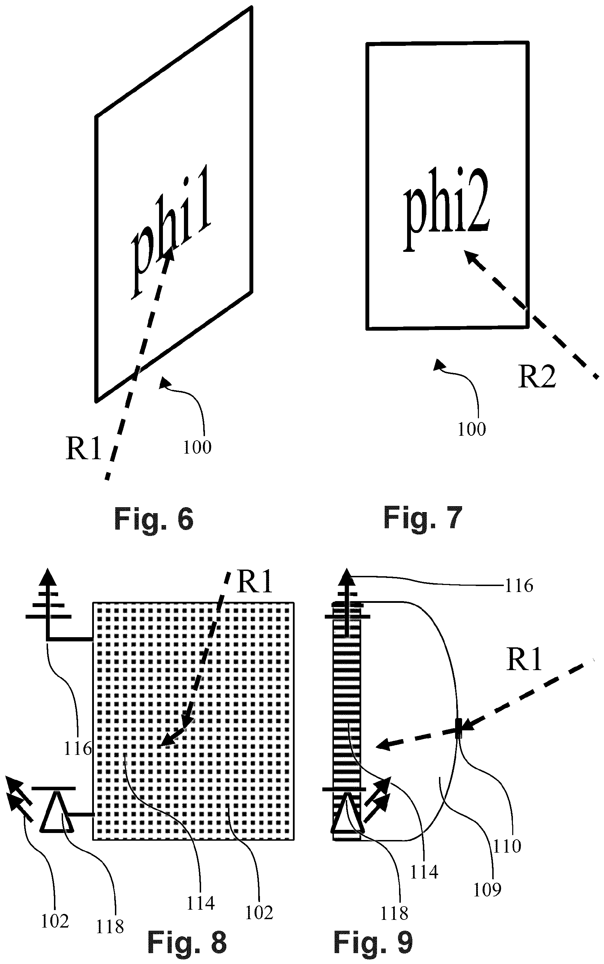

Während bei den vorangehend vorgestellten Positionsmarkierungen 100 beispielhaft Graustufen beziehungsweise Schwarz und Weiß in den richtungsabhängigen Mustern 102 und 103 verwendet worden sind, ist in **Fig. 6** und **Fig. 7** eine Positionsmarkierung 100 abgebildet, wie sie aus verschiedenen Sichtrichtungen R1 beziehungsweise R2 erkennbar ist. Die entsprechend den Sichtrichtungen R1 beziehungsweise R2 sichtbaren, scheinbaren Bilder repräsentieren bei diesem Ausführungsbeispiel einer Positionsmarkierung 100 unmittelbar zu den jeweiligen Sichtrichtungen R1 bzw. R2 korrespondierende Werte. Diese Werte sind in Fig. 6 beziehungsweise Fig. 7 mit dem Wert **phi1** beziehungsweise dem Wert **phi2** symbolisiert.

Eine solche Positionsmarkierung 100 lässt sich einfach beispielsweise mit Hilfe eines entsprechend belichteten Hologramms bilden. Ebenso ist denkbar, auch diese Positionsmarkierung 100 mit Hilfe eines Mehrfachbildes, beispielsweise eines Lentikularbildes, zu realisieren.

Eine weitere Positionsmarkierung 100 ist in **Fig. 8** und **Fig. 9** dargestellt. Dazu zeigt Fig. 8 eine Draufsicht und Fig. 9 eine Seitenansicht auf die Positionsmarkierung 100.

In Fig. 8 ist zu erkennen, dass die Positionsmarkierung 100 einen zweidimensionalen Bildsensor **114** aufweist. Beispielsweise kann es sich um einen CMOS-Bildsensor oder allgemein um eine Phototransistor-Matrix handeln.

Wie in Fig. 9 zu erkennen ist, weist die Positionsmarkierung 100 wiederum eine Sammellinse 109 auf. Sie kann auch einen Fokuspunkt 110 aufweisen. Wird nun Licht, beispielsweise Laserlicht, auf den Fokuspunkt 110 eingestrahlt, so trifft dieses je nach Richtung, beispielsweise also die Sichtrichtung R1, aus der das Licht kommt, auf unterschiedliche Stellen innerhalb des Bildsensors 114 auf.

Somit lässt sich die Sichtrichtung, aus der das Licht eingestrahlt wird und damit der entsprechende Sichtwinkel nicht nur in einer, sondern sogar in zwei Dimensionen ermitteln, indem die belichtete Stelle auf dem Bildsensor 114 ermittelt wird. Auch hier kann durch Codierung des eingestrahlten Lichts der Störabstand zu Hintergrundlicht verbessert werden.

Die Positionsmarkierung 100 kann eine Kommunikationsschnittstelle **116** aufweisen. Die Kommunikationsschnittstelle 116 kann beispielsweise eine Funkschnittstelle wie beispielsweise eine sogenannte Bluetooth-Schnittstelle oder eine sogenannte Wifi-Schnittstelle umfassen.

Über die Kommunikationsschnittstelle 116 kann dann der Sichtwinkel beziehungsweise die Sichtwinkel, wenn sie in den zwei Dimensionen separat erfasst werden, an beispielsweise ein Winkelmessgerät, von dem das Licht ausgestrahlt wird, gesendet werden. Denkbar ist auch, dasss der Bildsensor 114 und / oder ein anderer Bereich der Positionsmarkierung 100 mit einer steuerbaren Lichtquelle **118,** beispielsweise einer LED, ausgestattet ist. Dann kann über die steuerbare Lichtquelle 118 entsprechend dem ermittelten Sichtwinkel oder entsprechend den ermittelten Sichtwinkeln ein farbkodiertes oder anderweitig codiertes Lichtsignal von der Positionsmarkierung 100 abgestrahlt werden. Beispielsweise kann die scheinbare Farbe der Positionsmarkierung 100 somit danach variieren, aus welcher Richtung Licht, insbesondere geeignet codiertes Licht, auf sie eingestrahlt wird.

Die Positionsmarkierung 100 erzeugt somit ein richtungsabhängiges Muster 102 auf ihrem Bildsensor 114, in dem je nach Sichtwinkel das eingestrahlte Licht unterschiedliche Stellen des Bildsensors 114 beleuchtet und damit beispielsweise die jeweilige Stelle, nicht aber andere Stellen, entsprechend einfärbt. Vorzugsweise kann es sich bei dem eingestrahlten Licht um Laserlicht handeln, sodass die eingefärbte Stelle auf einen engen Punkt begrenzt sein kann.

Bei der Ausführungsform mit einer steuerbaren Lichtquelle 118 erzeugt die Positionsmarkierung 100 zudem ein richtungsabhängiges Muster 102, beispielsweise eine von der Richtung abhängige Farbe, mit Hilfe ihrer steuerbaren Lichtquelle 118.

**Fig. 10** zeigt einen Peilstab **120.** Der Peilstab 120 weist eine Peilmarkierung **122,** beispielsweise in Form eines Prismas, auf. Die Spitze **123** des Peilstabs 120 ist von der Peilmarkierung 122 eine Distanz **d1** entfernt. Sie berührt einen Punkt P, dessen Position bestimmt werden soll.

In einem oberen Bereich des Peilstabs 120 befindet sich eine Längenskala **124.** Die Längenskala 124 ist auf einem Material besonders geringer thermischer Längenausdehnung, insbesondere mit einer geringeren thermischen Längenausdehnung als Eisen, beispielsweise auf einem sogenannten INVAR-Stahl, aufgebracht. Vorzugsweise können auch andere Teile des Peilstabs 120 aus einem solchen Material ausgebildet sein.

Ferner weist der Peilstab 120 eine Positionsmarkierung 100 auf. Die Positionsmarkierung 100 dient wenigstens zur Unterscheidung zweier Halbräume, in denen sich der Peilstab 120 befinden kann. Insofern genügt eine Positionsmarkierung 100 gemäß Fig. 4.

Denkbar ist auch, die Positionsmarkierung 100 und die Längenskala 124 als ein Teil zusammenzufassen. Beispielsweise kann die Längenskala 124 dazu ein Mehrfachbild umfassen. Das Mehrfachbild kann zwei Bilder umfassen. Eines der Bilder kann beispielsweise die Längenskala in einer ersten Farbe und das andere Bild die Längenskala in einer zweiten Farbe zeigen.

Mit einem solchen Peilstab 120 ist es möglich, die mit der Spitze 123 kontaktierte Position P mithilfe einer Totalstation **126** zu bestimmen, selbst wenn der Peilstab 120 nicht exakt vertikal ausgerichtet ist, sondern sich in einer Schräglage relativ zur Schwerkraftrichtung befindet und beispielsweise nichtorthogonal mit einem Neigungswinkel **alpha,** hier einem Nickwinkel entsprechend, ungleich 90° gegen die Horizontale geneigt ist.

Dazu erzeugt die Totalstation 126 einen horizontalen Laserstrahl **HL** mit einem eingebauten Horizontallaser **128.** Die Totalstation 126 weist einen Distanzmesser **129,** insbesondere einen LIDAR, auf, mit dem sie eine Distanz x zur Peilmarkierung 122 messen kann. Ferner weist sie eine Kamera **130** auf, mit der sie ein Bild der Positionsmarkierung 100 sowie der Längenskala 124 aufnehmen kann.

Die Totalstation 126 misst mit einem eingebauten Winkelsensor **131** zusätzlich einen Winkel **beta** zwischen der Sichtrichtung zur Peilmarkierung 122 und der Horizontalen oder dem horizontalen Laserstrahl HL. Dazu kann der Winkelsensor 131 beispielsweise eine Stellung des Distanzmessers 129 auswerten, wenn er auf die Peilmarkierung 122 ausgerichtet ist.

Eine Schrägstellung des Peilstab 120 in einer Ebene senkrecht zur Bildebene der Fig. 10 kann in dem von der Kamera 130 aufgenommenen Bild der Längenskala 124 ermittelt werden. Abhängig von einer solchen Schrägstellung, also einem Gierwinkel, liegt auch die Längenskala 124 scheinbar rotiert gegen die Vertikale im aufgenommenen Bild.

Der Horizontallaser 128 belichtet einen Auftreffpunkt **A** auf der Längenskala 124 abhängig vom Neigungswinkel alpha des Peilstabes 120. Eine Distanz **d2** zwischen dem Auftreffpunkt A und der Peilmarkierung 122 ist anhand der Längenskala 124 direkt ablesbar. Dieser Auftreffpunkt A mitsamt der zugehörigen Längenangabe auf der Längenskala 124 wird durch die Kamera 130 auf ein Bild aufgenommen. Durch Auswerten des Bildbereichs, in dem die Längenskala 124 abgebildet ist, lässt sich der Neigungswinkel alpha bereits bis auf seinen Spiegelwinkel, also 180-alpha, eindeutig bestimmen.

Zur endgültig eindeutigen Unterscheidung, ob der Peilstab 120 entsprechend dem Winkel alpha oder dessen Spiegelwinkel geneigt ist, wertet die Totalstation 126 den Bildbereich im von der Kamera 130 aufgenommenen Bild aus, in dem die Positionsmarkierung 100 abgebildet ist.

Abhängig von der Ausgestaltung des richtungsabhängigen Musters der Positionsmarkierung 100 kann beispielsweise geschlossen werden, dass der Winkel alpha vorliegt, wenn beispielsweise die erste Farbe in der Positionsmarkierung 100 erkennbar ist. Ist die zweite Farbe erkennbar, kann beispielsweise auf den Spiegelwinkel zu alpha geschlossen werden.

In Kenntnis des Neigungswinkels alpha und des Gierwinkels lässt sich dann ein Versatz **dx** zwischen dem Lotpunkt **Q** der Peilmarkierung 122 und dem tatsächlichen Punkt P der Spitze 123 rechnerisch kompensieren. Es bedarf somit am Peilstab 120 weder beweglicher Teile noch einer Elektronik oder dergleichen, um driftfrei die Position des Punktes P relativ zur Totalstation 126 selbst bei schräg gestelltem Peilstab 120 zu ermitteln.

Bei einer alternativen Ausführungsform der Totalstation 126 kann diese zwei Kameras 130 aufweisen, die zueinander mit einer bekannten Distanz versetzt angeordnet sind. Dann kann gegebenenfalls sogar auf den Distanzmesser 129 und / oder auf den Winkelsensor 131 verzichtet werden.

Die Pixelzahl der Kamera 130 kann abhängig von einem vorgesehenen Arbeitsbereich der Totalstation 126, insbesondere von einem maximal zulässigen Abstand zwischen dem Peilstab 120 und der Totalstation 126, gewählt werden.

Die Längenskala 124 kann alternativ oder ergänzend auch mit einem Zeilensensor und / oder einem Matrixsensor analog zur Ausführungsform gemäß Figuren 8 und 9 ausgestattet sein. Bei einer solchen Ausführungsformen kann der Auftreffpunkt des Horizontallasers auf der Längenskala 124 direkt durch die Längenskala 124, insbesondere durch den Zeilensensor und / oder den Matrixsensor, bestimmt werden. Das Ergebnis kann über die Kommunikationsschnittstelle 116, beispielsweise an die Totalstation 126, übermittelt werden.

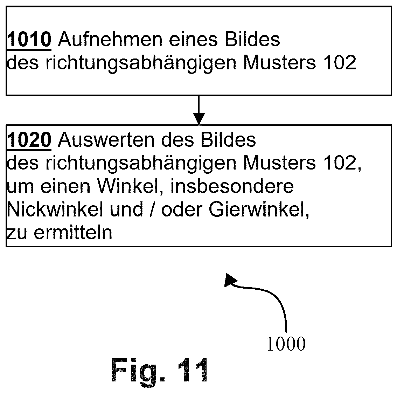

Anhand von **Fig. 11** wird nun ein Verfahren **1000** zur Messung eines Nickwinkels alpha und / oder eines Gierwinkels eines Körpers näher erläutert. Zum leichteren Verständnis wird auf die vorangehend eingeführten Bezugszeichen Bezug genommen.

Der Körper weist wenigstens eine Positionsmarkierung 100, beispielsweise nach einer der in Verbindung mit den Figuren 2 bis 9 beschriebenen Arten, auf. Die Positionsmarkierung 100 weist ein richtungsabhängiges Muster 102 auf.

Das richtungsabhängiges Muster 102 weist, wie vorangehend geschildert, einen funktionalen Zusammenhang zwischen einem Sichtwinkel oder einer Sichtrichtung, unter der das richtungsabhängige Muster 102 betrachtet und / oder mit Licht bestrahlt wird, und dem Erscheinungsbild des richtungsabhängigen Musters 102 auf.

Zur Messung des Nickwinkels alpha und / oder des Gierwinkels wird in einer Phase **1010** ein Bild des richtungsabhängigen Musters 102 aufgenommen.

In einer anschließenden Phase **1020** wird das Bild des richtungsabhängigen Musters 102 ausgewertet. Anhand des funktionalen Zusammenhangs des richtungsabhängigen Musters 102 zwischen dem Sichtwinkel und dem Erscheinungsbild wird der Winkel, also im Beispiel der Nickwinkel und / oder der Gierwinkel, als Funktion des aufgenommenen Bildes ermittelt.

Bei einer Variante des Verfahrens werden noch weitere in dem Bild enthaltene Daten ausgewertet. Insbesondere ist denkbar, wie in Bezug auf Fig. 10 beschrieben, auch eine Schräglage des richtungsabhängigen Musters 102 auszuwerten, um beispielsweise einen Gierwinkel zu bestimmen. Es können scheinbare Größenverhältnisse, beispielsweise eine Länge einer im Bild erkennbaren Oberkante im Verhältnis zu einer Länger einer im Bild erkennbaren Unterkante des richtungsabhängigen Musters 102 ausgewertet werden. Analog kann ein Verhältnis zwischen einer Länge einer linken Kante und einer Länge einer rechten Kante ausgewertet werden. Das Verhältnis kann jeweils in Bezug zu einem tatsächlichen Verhältnis gesetzt werden.

Bei einer alternativen oder ergänzenden Variante des Verfahrens 1000, wird vor Aufnahme des Bildes ein Licht, insbesondere ein Laserstrahl, auf die Positionsmarkierung 100 gestrahlt. Das Licht kann codiert sein. Beispielsweise kann es frequenzkodiert und / oder pulsweiten kodiert sein.

In der Phase 1010 kann nicht nur ein Bild, sondern eine Bildfolge, beispielsweise ein Videofilm, aufgenommen werden. Über mehrere nacheinander aufgenommene Bilder hinweg kann das codierte Licht innerhalb der aufgenommenen Bilder identifiziert werden. Störlicht und / oder irrelevanter Hintergrund können herausgerechnet werden.

Allgemein kann das Verfahren 1000 eine Phase enthalten, in der Störlicht und / oder Hintergrund oder zumindest Teile eines Hintergrundes aus dem Bild oder aus den Bildern herausgerechnet werden.

### Bezugszeichenliste

- 10: Bauroboter
- 12: Fahrplattform
- 14: Gehäuse
- 16: Steuerraum
- 17: Hubvorrichtung
- 18: Roboterarm
- 19: Arm
- 20: Endeffektor
- 21: Wechselschnittstelle
- 22: Werkzeugmaschine
- 100: Positionsmarkierung
- 102: Muster
- 103: Muster
- 104: Vorderseite
- 106: Wölbung
- 107: Lentikularbild
- 108: Bereich
- 109: Sammellinse
- 110: Fokuspunkt
- 112: Einzelbild
- 113: Einzelbild
- 114: Bildsensor
- 116: Kommunikationsschnittstelle
- 118: Lichtquelle
- 120: Peilstab
- 122: Peilmarkierung
- 123: Spitze
- 124: Längenskala
- 126: Totalstation
- 128: Horizontallaser
- 129: Distanzmesser
- 130: Kamera
- 131: Winkelsensor
- 1000: Verfahren
- 1010: Phase
- 1020: Phase
- A: Auftreffpunkt
- HL: Laserstrahl
- P: Punkt
- Q: Lotpunkt
- R1: Sichtrichtung
- R2: Sichtrichtung
- alpha: Neigungswinkel
- beta: Winkel
- d1: Distanz
- d2: Distanz
- dx: Versatz
- phi1: Wert
- phi2: Wert
- x: Distanz

## Patentansprüche

1. **Positionsmarkierung (100)** für ein Winkelmessgerät, beispielsweise eine Totalstation (126), **dadurch gekennzeichnet, dass** die Positionsmarkierung (100) ein richtungsabhängiges Muster (102) aufweist und / oder erzeugt.

2. Positionsmarkierung (100) nach dem vorhergehenden Patentanspruch, **dadurch gekennzeichnet, dass** die Positionsmarkierung (100) wenigstens eine Wölbung (106) aufweist, beispielsweise dass die Positionsmarkierung (100) eine zylindrische oder teilzylindrische Form, eine Röhrenform, eine Stangenform, eine Teilkugelform und / oder eine ellipsoide Form aufweist.

3. Positionsmarkierung (100) nach einem der vorhergehenden Patentansprüche, **dadurch gekennzeichnet, dass** die Positionsmarkierung (100) ein in zwei verschiedenen, insbesondere zueinander orthogonalen, Richtungen variierendes Muster (102) aufweist.

4. Positionsmarkierung (100) nach einem der vorhergehenden Patentansprüche, **dadurch gekennzeichnet, dass** die Positionsmarkierung (100) ein Muster (102) mit mehr als zwei verschiedenen Ausprägungen, insbesondere einen Verlauf, aufweist.

5. Positionsmarkierung (100) nach einem der vorhergehenden Patentansprüche, **dadurch gekennzeichnet, dass** die Positionsmarkierung (100) ein optisch anisotropes Material und / oder ein optisch dichroitisches Material aufweist.

6. Positionsmarkierung (100) nach einem der vorhergehenden Patentansprüche, **dadurch gekennzeichnet, dass** die Positionsmarkierung (100) ein Mehrfachbild, insbesondere ein Lentikularbild (107), ein Parallaxenbarrieren-Bild aufweist und / oder ein Hologramm, aufweist.

7. **Bauroboter (10)** zur Ausführung einer Bauarbeit auf einer Baustelle, umfassend eine Fahrplattform (12), einen Roboterarm (18) mit einem Endeffektor (20) sowie einer Positionsmarkierung (100) nach einem der vorhergehenden Patentansprüche.

8. **Peilstab (120)** zur Vermessung eines Messpunktes, **dadurch gekennzeichnet, dass** der Peilstab (120) wenigstens eine Positionsmarkierung (100) nach einem der Patentansprüche 1 bis 6 aufweist.

9. Peilstab (120) nach dem vorhergehenden Anspruch, **dadurch gekennzeichnet, dass** der Peilstab (120) eine Längenskala (124) aufweist.

10. **Verfahren (1000) zur Messung** eines Nickwinkels und / oder eines Gierwinkels eines Körpers, wobei der Körper wenigstens eine Positionsmarkierung (100) nach einem der Patentansprüche 1 bis 6 aufweist, wobei wenigstens ein Bild des richtungsabhängigen Musters (102) aufgenommen wird, wobei der Winkel (beta) als Funktion des aufgenommenen Bildes ermittelt wird.

11. **Winkelmessgerät,** beispielsweise eine Totalstation (126), umfassend wenigstens eine Kamera (130), wobei das Winkelmessgerät eingerichtet ist, eine Positionsmarkierung (100) nach einem der Patentansprüche 1 bis 6 auszuwerten, um einen Sichtwinkel zur Positionsmarkierung (100) zu ermitteln.

12. Winkelmessgerät nach dem vorhergehenden Patentanspruch, **dadurch gekennzeichnet, dass** das Winkelmessgerät wenigstens zwei zueinander versetzte Kameras (130) aufweist.

13. Winkelmessgerät nach einem der beiden vorhergehenden Patentansprüche, **dadurch gekennzeichnet, dass** das Winkelmessgerät wenigstens einen Distanzmesser (129) aufweist.

14. Winkelmessgerät nach einem der Patentansprüche 11 bis 13, **dadurch gekennzeichnet, dass** das Winkelmessgerät wenigstens einen Linienlaser, insbesondere einen Horizontallaser (128), aufweist.
